# EUROPÄISCHE PATENTSCHRIFT

(11) **EP 3 533 562 B1**
(45) Veröffentlichungstag und Bekanntmachung des Hinweises auf die Patenterteilung: **06.04.2022**
(21) Anmeldenummer: 19155061.5
(22) Anmeldetag: 01.02.2019
(51) Int. Cl.: B25F 5/00

(54) **HANDGEFÜHRTES ARBEITSGERÄT**
MANUALLY OPERATED WORK DEVICE
APPAREIL DE TRAVAIL À COMMANDE MANUELLE

(30) Priorität: 07.02.2018 DE 102018000975
(43) Veröffentlichungstag der Anmeldung: 04.09.2019
(73) Patentinhaber: Andreas Stihl AG & Co. KG, 71336 Waiblingen (DE)
(72) Erfinder: Menzel, Johannes, 73249 Wernau/Neckar (DE); Wörner, Tobias, 71404 Korb (DE); Pelludat, Simone, 73614 Schorndorf (DE); Siam, Samir, 70374 Stuttgart (DE); Schmid, Marc, 71570 Oppenweiler (DE)
(74) Vertreter: Reinhardt, Annette

(56) Entgegenhaltungen:
- EP-A1- 2 324 963
- DE-A1- 10 034 437
- US-A- 4 491 184
- US-A- 5 692 306
- US-A1- 2009 277 142
- US-A1- 2010 054 853

## Beschreibung

Die Erfindung betrifft ein handgeführtes Arbeitsgerät der im Oberbegriff des Anspruchs 1 angegebenen Gattung.

Aus der DE 100 34 437 A1 ist ein handgeführtes Arbeitsgerät, gemäss dem Oberbegriff des Anspruchs 1 bekannt, der ein Führungsrohr besitzt. An einem Ende des Führungsrohrs ist ein Gehäuse angeordnet, in dem ein Antriebsmotor angeordnet ist. Am anderen Ende des Führungsrohrs ist das Werkzeug des Freischneiders angeordnet. Durch das Führungsrohr ragt eine Antriebswelle zum Antrieb des Werkzeugs. Zwischen dem Führungsrohr und dem Gehäuse des Antriebsmotors ist ein Dämpfungselement angeordnet.

Die US 5,692,306 A zeigt einen Freischneider, dessen Führungsrohr von einem Griffgehäuse umgriffen ist, das über Dämpfungselemente sowohl mit dem Führungsrohr als auch mit dem Motorgehäuse verbunden ist.

Die US 2009/0277142 A1 zeigt eine Motorsense mit einer Führungsstange, die aus einem Führungsstangenelement und einem Schaftrohr gebildet ist. Das Führungsstangenelement ist über Dämpfungselemente mit dem Schaftrohr und mit einem Motorgehäuse verbunden. Das Schaftrohr ragt beidseitig aus dem Führungsstangenelement heraus.

Es hat sich gezeigt, dass es insbesondere bei Arbeitsgeräten mit langem Führungsrohr, beispielsweise bei Heckenschneidern oder Hochentastern oder dergleichen, trotz der Anbindung des Führungsrohrs an dem Gehäuse über ein Antivibrationselement im Betrieb zu Schwingungen kommen kann.

Es ist auch bekannt, Führungsrohre von handgeführten Arbeitsgeräten mit einer Teleskopeinrichtung zu versehen, die eine Längeneinstellung des Führungsrohrs ermöglichen. Das Führungsrohr besteht hierzu üblicherweise aus mindestens zwei Teilabschnitten, die ineinander geschoben oder auseinander gezogen und in gewünschten Positionen miteinander verspannt werden können. Die Befestigung der beiden Teilabschnitte des Führungsrohrs zueinander ist dabei fest und formstabil ausgeführt.

Es hat sich gezeigt, dass das Führungsrohr im Betrieb durch Erregerkräfte zu Biegeschwingungen angeregt werden kann. Diese Schwingungen werden auf die Griffstellen übertragen.

Der Erfindung liegt die Aufgabe zugrunde, ein handgeführtes Arbeitsgerät der gattungsgemäßen Art zu schaffen, das ein ergonomisches Arbeiten ermöglicht.

Diese Aufgabe wird durch ein handgeführtes Arbeitsgerät mit den Merkmalen des Anspruchs 1 gelöst.

Die Positionierung der Griffstellen an dem Führungsrohr ist aus ergonomischen Gründen üblicherweise in engen Grenzen vorgegeben. Dadurch ist aus ergonomischen Gründen die Positionierung der Griffstellen im Bereich von Schwingungsbäuchen des Führungsrohrs notwendig. Um die Schwingungsamplituden an den Griffstellen zu verringern, sieht die vorliegende Erfindung vor, die Schwingungsform des Führungsrohrs zu verändern. Hierzu ist vorgesehen, dass das Führungsrohr in Längsrichtung mindestens einen ersten starren Teilabschnitt und einen zweiten starren Teilabschnitt umfasst. Die beiden Teilabschnitte überlappen sich dabei höchstens teilweise, so dass sowohl der erste starre Teilabschnitt als auch der zweite starre Teilabschnitt jeweils einen Längsabschnitt des Führungsrohrs bilden, in dem der jeweils andere starre Teilabschnitt nicht angeordnet ist. Die beiden Teilabschnitte sind an einer Stoßstelle miteinander verbunden. An der Stoßstelle sind die beiden Teilabschnitte über mindestens ein zweites Antivibrationselement schwingungsdämpfend miteinander verbunden. Das Führungsrohr ist demnach nicht durch ein starres Rohr oder mehrere starr miteinander verbundene Teilabschnitte gebildet, wie dies bei Teleskoprohren der Fall ist. Vielmehr ist das Führungsrohr in mindestens zwei starre Teilabschnitte geteilt, die über ein Antivibrationselement, also ein elastisches Element, verbunden sind. Das Antivibrationselement ist dabei insbesondere ein Feder-Dämpfer-Element, also ein Element, das federnde Eigenschaften sowie dämpfende Eigenschaften besitzt. Das Führungsrohr kann weitere Teilabschnitte umfassen die starr oder über ein oder mehrere Antivibrationselemente mit dem ersten Teilabschnitt oder dem zweiten Teilabschnitt verbunden sind.

Durch die Verbindung der beiden starren Teilabschnitte des Führungsrohrs über mindestens ein Antivibrationselement kann die Schwingungsform des Führungsrohrs auf einfache Weise verändert werden. Die Schwingungsform des Führungsrohrs ist dabei vorteilhaft so verändert, dass eine Griffstelle am Führungsrohr nicht im Bereich eines Schwingungsbauches angeordnet ist. Die Ausbildung des Führungsrohrs aus mindestens zwei Teilabschnitten kann insgesamt auch eine Verringerung der Amplitude der Schwingungen bewirken.

Die beiden Teilabschnitte besitzen vorteilhaft eine unveränderliche Gesamtlänge. In bevorzugter Gestaltung handelt es sich bei den beiden starren Teilabschnitten demnach nicht um zueinander verschiebbare Abschnitte einer Teleskopeinrichtung. In alternativer Gestaltung kann jedoch vorgesehen sein, dass die Gesamtlänge der beiden Teilabschnitte veränderbar sind, die beiden Teilabschnitte also insbesondere Abschnitte einer Teleskopvorrichtung sind. Im Unterschied zu bekannten Teleskopeinrichtungen sind die beiden starren Teilabschnitte jedoch nicht starr miteinander verbunden, sondern über das mindestens eine zweite Antivibrationselement.

Die in Längsrichtung gemessene Gesamtlänge des Führungsrohrs ist insbesondere größer als die in Längsrichtung gemessene Länge jedes der beiden Teilabschnitte. Keiner der Teilabschnitte erstreckt sich demnach über die Gesamtlänge des Führungsrohrs. Jeder der Teilabschnitte bildet einen separaten Längsabschnitt des Führungsrohrs aus.

Das zweite Antivibrationselement besteht vorteilhaft mindestens teilweise aus Elastomer. Das Elastomer kann insbesondere ein Gummi sein. Das zweite Antivibrationselement kann vorteilhaft vollständig aus Elastomer bestehen.

In vorteilhafter Gestaltung ist die Stoßstelle außerhalb der beiden Massekörper angeordnet. Die Stoßstelle ist dabei vorteilhaft zwischen den Massekörpern angeordnet. Die Länge jedes Teilabschnitts ist dadurch kleiner als die Gesamtlänge des Führungsrohrs, so dass sich eine andere Schwingungsform als bei einem aus nur einem Teilabschnitt bestehenden Führungsrohr ergibt.

Der zweite Teilabschnitt besitzt eine dem ersten Massekörper zugewandte Stirnseite, die zum ersten Massekörper einen Abstand besitzt, der kleiner als ein Drittel, insbesondere kleiner als ein Fünftel, bevorzugt kleiner als ein Zehntel des Abstands zwischen dem ersten Massekörper und dem zweiten Massekörper ist. Das zweite Antivibrationselement ist demnach außermittig zwischen den beiden Massekörpern angeordnet. Bei einem Führungsrohr mit einer Teleskopeinrichtung ist der Abstand zwischen dem ersten Massekörper und dem zweiten Massekörper der Abstand der beiden Massekörper bei maximaler Länge des Führungsrohrs, also bei vollständig ausgezogener Teleskopeinrichtung.

In vorteilhafter Gestaltung übergreift der erste Teilabschnitt den zweiten Teilabschnitt in Längsrichtung des Führungsrohrs im Bereich der Stoßstelle. Dadurch besitzt das Führungsrohr im Bereich der Stoßstelle trotz dem zwischen den Teilabschnitten angeordneten Antivibrationselement eine ausreichende Steifigkeit. Der erste Teilabschnitt verhindert insbesondere ein Ausknicken des Führungsrohrs an der Stoßstelle. Ein einfacher Aufbau ergibt sich, wenn das zweite Antivibrationselement bezüglich der Längsachse des Führungsrohrs in Radialrichtung zwischen dem ersten Teilabschnitt und dem zweiten Teilabschnitt angeordnet ist.

In alternativer Gestaltung ist vorteilhaft vorgesehen, dass die einander zugewandten Stirnseiten des ersten Teilabschnitts und des zweiten Teilabschnitts in Längsrichtung des Führungsrohrs überlappungsfrei nebeneinander angeordnet sind. Vorteilhaft ist das zweite Antivibrationselement bezogen auf die Längsrichtung radial außerhalb des ersten Teilabschnitts und des zweiten Teilabschnitts angeordnet. Das zweite Antivibrationselement liegt dabei vorteilhaft an mindestens einem Teilabschnitt, insbesondere an beiden Teilabschnitten an. Alternativ kann vorteilhaft vorgesehen sein, dass das zweite Antivibrationselement bezogen auf die Längsrichtung radial innerhalb des ersten Teilabschnitts und des zweiten Teilabschnitts angeordnet ist, und dass das zweite Antivibrationselement insbesondere an mindestens einem Teilabschnitt, bevorzugt an beiden Teilabschnitten anliegt. Es kann auch vorgesehen sein, dass ein zweites Antivibrationselement radial außerhalb der Teilabschnitte angeordnet ist und ein weiteres zweites Antivibrationselement radial innerhalb der Teilabschnitte. Alternativ oder zusätzlich ist vorteilhaft vorgesehen, dass das zweite Antivibrationselement zwischen einander zugewandten Stirnseiten des ersten Teilabschnitts und des zweiten Teilabschnitts angeordnet ist. Das zweite Antivibrationselement kann dabei teilweise oder vollständig zwischen den Stirnseiten der Teilabschnitte angeordnet sein. Das zweite Antivibrationselement kann vorteilhaft teilweise zwischen den Stirnseiten der Teilabschnitte und teilweise radial innerhalb und/oder radial außerhalb der Teilabschnitte angeordnet sein.

In vorteilhafter Gestaltung ist das zweite Antivibrationselement drehfest mit dem ersten Teilabschnitt und drehfest mit dem zweiten Teilabschnitt verbunden. Dadurch sind die beiden Teilabschnitte über das Antivibrationselement federnd drehfest miteinander verbunden. Über das Antivibrationselement lassen sich dadurch Torsionskräfte des Führungsrohrs übertragen.

In vorteilhafter Gestaltung ist das zweite Antivibrationselement über eine Befestigungsvorrichtung fixiert. Die Befestigungsvorrichtung besitzt insbesondere eine geringere Steifigkeit als das Führungsrohr abseits der Stoßstelle und abseits des Antivibrationselements. Vorteilhaft ist die Steifigkeit des Antivibrationselements geringer als die Steifigkeit der Befestigungsvorrichtung. Die Steifigkeit der Befestigungsvorrichtung ist vorteilhaft geringer als die Steifigkeit des Führungsrohrs abseits der Stoßstelle und abseits des Antivibrationselements, also in einem Längsabschnitt des Führungsrohrs, in den sich die Stoßstelle und das Antivibrationselement nicht erstrecken. An der Stoßstelle ergibt sich dadurch eine verringerte Steifigkeit des Führungsrohrs, die zu einer Veränderung der Schwingungsform des Führungsrohrs führt. In vorteilhafter Gestaltung ist die Elastizität der Befestigungsvorrichtung größer als die des Führungsrohrs abseits der Stoßstelle.

Vorteilhaft erfolgt die Sicherung der Teilabschnitte zueinander in Richtung der Längsmittelachse des Führungsrohrs durch die Befestigungsvorrichtung. Dadurch werden keine zusätzlichen Mittel zur axialen Lagesicherung der Abschnitte zueinander benötigt. In vorteilhafter Gestaltung ist die Befestigungsvorrichtung zumindest an einem Teilabschnitt, insbesondere an beiden Teilabschnitten mittels eines Befestigungselements fixiert. In besonders bevorzugter Gestaltung ist die Befestigungsvorrichtung als Griff ausgebildet. Dadurch werden keine zusätzlichen Elemente für die Befestigungsvorrichtung benötigt. Der Griff umgreift das Führungsrohr in besonders bevorzugter Gestaltung an der Stoßstelle, so dass die Stoßstelle verdeckt und für den Bediener nicht sichtbar ist.

Vorteilhaft besitzen die beiden Teilabschnitte an der dem ersten Massekörper zugewandten Stirnseite den gleichen Außendurchmesser. Beide Teilabschnitte können deshalb an dem ersten Massekörper montiert werden. Dadurch ist auf einfache Weise eine Nachrüstung bestehender Führungsrohre mit einem zweiten Teilabschnitt möglich. Aufgrund der Gestaltung des Führungsrohrs aus zwei Teilabschnitten ist keine Änderung der konstruktiven Abmessungen der Befestigungsstelle des zweiten Massekörpers am Führungsrohr notwendig.

In bevorzugter Gestaltung umfasst der erste Massekörper das Gehäuse und der zweite Massekörper das Werkzeug. Das erste Antivibrationselement ist demnach zwischen dem Führungsrohr und dem Gehäuse angeordnet. Die Stoßstelle ist bevorzugt näher am Gehäuse als am Werkzeug angeordnet. Es kann jedoch auch vorgesehen sein, dass die Stoßstelle näher am Werkzeug angeordnet ist als am Gehäuse. Es kann auch vorgesehen sein, dass das Antivibrationselement zwischen dem Führungsrohr und dem Werkzeug angeordnet ist.

Ausführungsbeispiele der Erfindung werden im Folgenden anhand der Zeichnung erläutert. Es zeigen:
- Fig. 1: eine perspektivische Darstellung eines Heckenschneiders,
- Fig. 2: den Bereich des Gehäuses des Heckenschneiders aus Fig. 1 in vergrößerter perspektivischer Darstellung,
- Fig. 3: den Bereich des Gehäuses des Heckenschneiders in Seitenansicht,
- Fig. 4: eine ausschnittsweise Schnittdarstellung durch das Gehäuse und das Führungsrohr des Heckenschneiders,
- Fig. 5: eine Schnittdarstellung des gehäuseseitigen Abschnitts des ersten Teilabschnitts und des zweiten Teilabschnitts des Führungsrohrs des Heckenschneiders,
- Fig. 6: eine schematische Schnittdarstellung entlang der Linie VI-VI in Fig. 4,
- Fig. 7: eine vergrößerte Darstellung des Bereichs des Führungsrohrs der Schnittdarstellung aus Fig. 6,
- Fig. 8: einen Schnitt entlang der Linie VIII-VIII in Fig. 4,
- Fig. 9: eine vergrößerte Darstellung des Bereichs des Führungsrohrs der Schnittdarstellung aus Fig. 8,
- Fig. 10: eine schematische ausschnittsweise, teilgeschnittene Darstellung eines Ausführungsbeispiels des Führungsrohrs,
- Fig. 11 bis Fig. 14: schematische Schnittdarstellungen von Ausführungsbeispielen von Stoßstellen des Führungsrohrs.

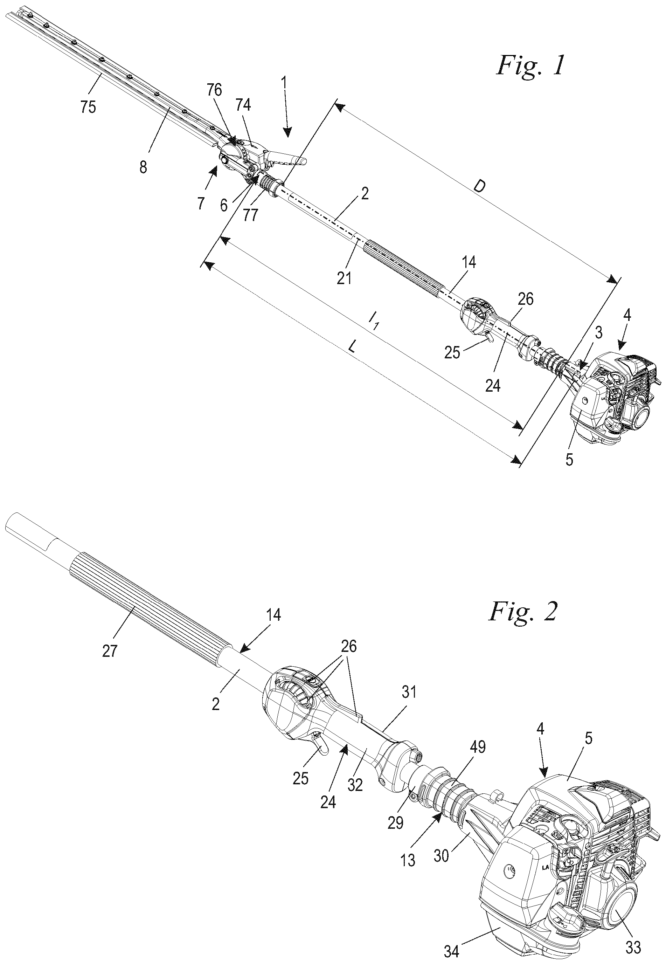

Fig. 1 zeigt in perspektivischer Darstellung ein Arbeitsgerät 1, im Ausführungsbeispiel einen Heckenschneider. Das Arbeitsgerät 1 besitzt einen ersten Massekörper 4 und einen zweiten Massekörper 7, die über ein Führungsrohr 2 miteinander verbunden sind. Das Arbeitsgerät 1 kann anstatt eines Heckenschneiders 1 auch ein anderes Arbeitsgerät mit einem Führungsrohr 2, beispielsweise ein Hochentaster, ein Freischneider, eine Motorsense oder dergleichen sein. Der erste Massekörper 4 umfasst ein Gehäuse 5, in dem im Ausführungsbeispiel ein in Fig. 1 nicht gezeigter Antriebsmotor angeordnet ist. Der erste Massekörper 4 ist an einem ersten Ende 3 des Führungsrohrs 2 angeordnet. An einem zweiten Ende 6 des Führungsrohrs 2 ist der zweite Massekörper 7 angeordnet. Der zweite Massekörper 7 umfasst im Ausführungsbeispiel ein Werkzeug 8 des Heckenschneiders, das im Ausführungsbeispiel nicht gezeigte, gegensinnig hin- und hergehend angetriebene Messerbalken umfasst. In der Darstellung in Fig. 1 ist an den Messerbalken ein Schnittschutz 75 angeordnet.

Das Werkzeug 8 ist mit dem zweiten Ende 6 des Führungsrohrs 2 über ein Getriebegehäuse 74 verbunden. Auch das Getriebegehäuse 74 ist Teil des zweiten Massekörpers 7. Das Getriebegehäuse 74 umfasst einen Verstellmechanismus 76, über den die Ausrichtung des Werkzeugs 8 gegenüber dem Führungsrohr 2 verstellbar ist. Zum Lösen und Fixieren des Verstellmechanismus 76 ist eine Verstellhülse 77 vorgesehen, die in Richtung einer Längsmittelachse 21 des Führungsrohrs 2 verschiebbar am Führungsrohr 2 gelagert ist. Auch die Verstellhülse 77 ist Teil des zweiten Massekörpers 7.

In alternativer Ausführung kann auch vorgesehen sein, dass der erste Massekörper 4 das Werkzeug 8 und insbesondere auch das Getriebegehäuse 74 umfasst und dass der zweite Massekörper 7 das Gehäuse 5 umfasst.

Der erste Massekörper 4 und der zweite Massekörper 7 besitzen zueinander einen parallel zur Längsmittelachse 21 gemessenen Abstand D, der beispielsweise 0,5 m bis 3,5 m betragen kann. Im Ausführungsbeispiel besitzt das Führungsrohr 2 eine unverstellbare Länge. Es ist jedoch auch bekannt, Führungsrohre 2 mit einer Teleskopeinrichtung zu versehen, die eine Verstellung der Länge des Führungsrohrs 2 erlaubt. Das Führungsrohr 2 besitzt eine Gesamtlänge L. Bei Führungsrohren 2 mit einer Teleskopeinrichtung ist die Gesamtlänge L veränderbar. Der Abstand D zwischen den Massekörpern 4 und 7 ist bei Führungsrohren 2 mit Teleskopeinrichtung der maximale Abstand der Massekörper 4 und 7, also der Abstand bei vollständig ausgezogener Teleskopeinrichtung. Die Gesamtlänge L des Führungsrohrs 2 ist zwischen den Enden 3 und 6 des Führungsrohrs 2 gemessen. Zur Fixierung der Massekörper 4 bzw. 7 am Führungsrohr 2 ragt das Führungsrohr 2 in die Massekörper 4 und 7 hinein, so dass die Gesamtlänge L größer als der Abstand D der Massekörper 4 und 7 ist.

Das Führungsrohr 2 besitzt einen in Fig. 2 gezeigten ersten Teilabschnitt 13 sowie einen auch in Fig. 1 gezeigten zweiten Teilabschnitt 14, die im Folgenden noch näher erläutert werden. Der zweite Teilabschnitt 14 besitzt eine parallel zur Längsmittelachse 21 gemessene Länge l₁. Benachbart zum ersten Massekörper 4 ist am Führungsrohr 2 ein Handgriff 24 angeordnet. Im Ausführungsbeispiel umschließt der Handgriff 24 das Führungsrohr 2. Am Handgriff 24 sind Bedienelemente 25 und 26 vorgesehen. Das Bedienelement 25 ist im Ausführungsbeispiel ein Gashebel.

Wie die vergrößerte Darstellung in Fig. 2 zeigt, umfasst der erste Massekörper 4 eine am Gehäuse 5 angeordnete Anwerfvorrichtung 33, im Ausführungsbeispiel einen Seilzugstarter. Der erste Massekörper 4 umfasst außerdem einen Kraftstofftank 34. Das erste Ende 3 des Führungsrohrs 2 ist in einem Aufnahmestutzen 30 des Gehäuses 5 gehalten. Benachbart zum Aufhahmestutzen 30 ist ein Aufnahmeabschnitt 49 angeordnet, der im Folgenden noch näher beschrieben wird. Der Aufhahmeabschnitt 49 ist Teil eines ersten Teilabschnitts 13 des Führungsrohrs 2. Der Aufnahmeabschnitt 49 ist im Ausführungsbeispiel der Längenabschnitt des ersten Teilabschnitts 13, der einen vergrößerten Außendurchmesser besitzt und in den der zweite Teilabschnitt 14 ragt. An der dem Gehäuse 5 abgewandten Seite ist am Aufnahmeabschnitt 49 eine Schelle 29 des zweiten Teilabschnitts 14 angeordnet. Wie Fig. 2 auch zeigt, besteht der Handgriff 24 aus zwei Griffschalen 31 und 32. Die Bedienelemente 26 umfassen im Ausführungsbeispiel eine Gashebelsperre, ein Bedienrad zur Fixierung des Bedienelements 25, also des Gashebels, in gewünschten Positionen sowie einen Stoppschalter. Auch andere oder weitere Bedienelemente 26 können vorteilhaft sein. Wie Fig. 2 auch zeigt, ist am Führungsrohr 2 zwischen dem Handgriff 24 und dem zweiten Massekörper 7 (Fig. 1) eine Ummantelung 27 angeordnet, die sich über einen Teilabschnitt der Gesamtlänge L des Führungsrohrs 2 erstreckt, und die ebenfalls als Griffbereich dienen kann.

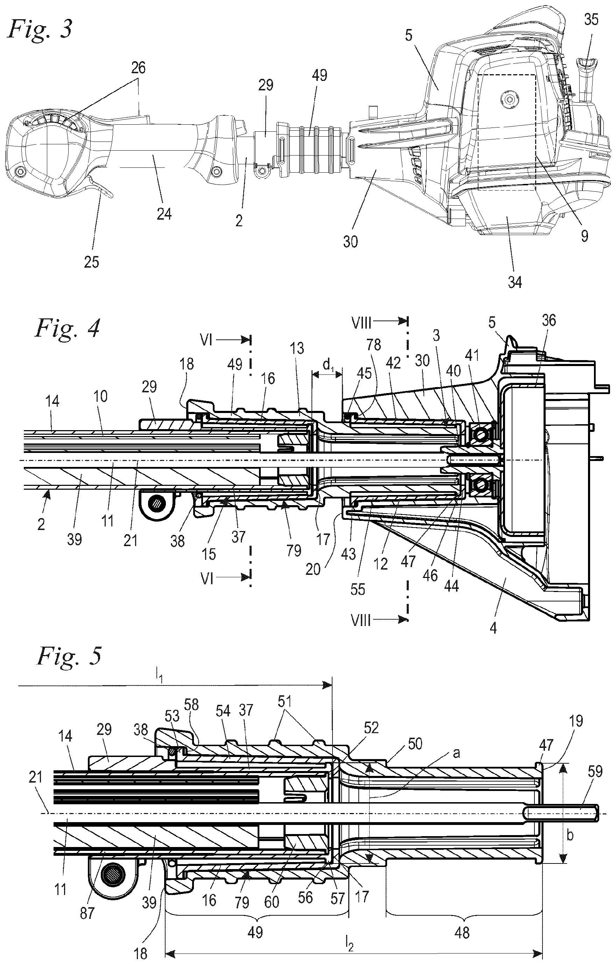

Wie Fig. 3 schematisch zeigt, ist im Gehäuse 5 ein Antriebsmotor 9 angeordnet. Im Ausführungsbeispiel ist der Antriebsmotor 9 ein Verbrennungsmotor, insbesondere ein Zweitaktmotor oder ein gemischgeschmierter Viertaktmotor. Der Antriebsmotor 9 ist insbesondere ein Einzylindermotor. Zum Anwerfen des Antriebsmotors 9 dient die in Fig. 2 gezeigte Anwerfvorrichtung 33. Die Anwerfvorrichtung 33 besitzt einen Anwerfgriff 35, der in Fig. 3 gezeigt ist und aus dem Gehäuse 5 ragt.

Fig. 4 zeigt einen Schnitt durch das Gehäuse 5 und den benachbart zum Gehäuse 5 angeordneten Bereich des Führungsrohrs 2. Wie Fig. 4 zeigt, ist im Gehäuse 5 eine Kupplungstrommel 36 angeordnet, die Teil einer Fliehkraftkupplung ist. Die Kupplungstrommel 36 verbindet eine Kurbelwelle des Antriebsmotors 9 oberhalb einer Einkuppeldrehzahl mit einem Mittel 11 zur Energieübertragung, im Ausführungsbeispiel mit einer Antriebswelle. Das Mittel 11 zur Energieübertragung ist im Inneren 10 des Führungsrohrs 2 geführt und durchragt das Führungsrohr 2 vom ersten Massekörper 4 zum zweiten Massekörper 7 (Fig. 1). Wie Fig. 4 auch zeigt, ist an der Kupplungstrommel 36 eine Antriebshülse 40 fixiert, in die das Mittel 11 zur Energieübertragung ragt. Die Antriebshülse 40 ist über ein Lager 41 im Aufhahmestutzen 30 des Gehäuses 5 drehbar gelagert.

Im Aufnahmestutzen 30 des Gehäuses 5 ist eine Gehäuseaufnahme 42 ausgebildet, die im Ausführungsbeispiel als längliche Vertiefung ausgebildet ist. Die Gehäuseaufhahme 42 besitzt in Richtung auf ihr freies Ende einen Bund 78, an dem sich der Durchmesser erweitert. Am Bund 78 liegt ein nach außen ragender Rand 43 eines ersten Antivibrationselements 12 des Arbeitsgeräts 1 an. Das erste Antivibrationselement 12 ist topfförmig ausgebildet und besitzt an dem dem zweiten Massekörper 7 (Fig. 1) abgewandten, im Ausführungsbeispiel dem Antriebsmotor 9 (Fig. 3) zugewandten Ende einen Boden 44, der als nach innen ragender Rand ausgebildet ist. Durch eine mittige Öffnung im Boden 44 ragt die Antriebshülse 40. Benachbart zum Boden 44 ist im Inneren des ersten Antivibrationselements 12 eine Vertiefung 46 ausgebildet, in die ein nach außen ragender Bund 47 des ersten Teilabschnitts 13 des Führungsrohrs 2 ragt. Dadurch ist der erste Teilabschnitt 13 in Richtung der Längsmittelachse 21 in der Gehäuseaufnahme 42 gesichert. Zur Sicherung der Lage des Antivibrationselements 12 in der Gehäuseaufhahme 42 in Richtung der Längsmittelachse 21 ist ein Haltering 45 vorgesehen. Dadurch kann das Antivibrationselement 12 nicht aus der Gehäuseaufnahme 42 gezogen werden. Wie Fig. 4 zeigt, besitzt das erste Antivibrationselement 12 einen Grundkörper 55, der als Hohlzylinder ausgebildet ist und an dem der Boden 44 und der Rand 43 ausgebildet sind.

Das Führungsrohr 2 ist im Ausführungsbeispiel aus den beiden Teilabschnitten 13 und 14 ausgebildet. Der erste Teilabschnitt 13 ist am ersten Massekörper 4 angeordnet, nämlich in die Gehäuseaufnahme 42 eingesteckt. Der zweite Teilabschnitt 14 erstreckt sich bis zum zweiten Massekörper 7 (Fig. 1). Die beiden Teilabschnitte 13 und 14 sind an einer Stoßstelle 15 miteinander verbunden, und zwar über ein zweites Antivibrationselement 16. Im Ausführungsbeispiel übergreift der erste Teilabschnitt 13 mit seinem Aufnahmeabschnitt 49 den zweiten Teilabschnitt 14. Im Aufnahmeabschnitt 49 ist eine Teilabschnittsaufhahme 79 ausgebildet. Im Ausführungsbeispiel sind die Form und die Abmessungen der Teilabschnittsaufhahme 79 identisch zur Form und den Abmessungen der Gehäuseaufnahme 42 ausgebildet, so dass der zweite Teilabschnitt 14 anstelle des ersten Teilabschnitts 13 in der Gehäuseaufnahme 42 montierbar ist. In das zweite Antivibrationselement 16 ragt eine Innenhülse 37, die einteilig mit der Schelle 29 ausgebildet ist. Die Innenhülse 37 und die Schelle 29 sind Teil des zweiten Teilabschnitts 14 des Führungsrohrs 2 und mit einem rohrförmigen Abschnitt 87 des zweiten Teilabschnitts 14 fest verbunden. Zur Sicherung des Antivibrationselements 16 in der Teilabschnittsaufnahme 79 ist ein Haltering 38 vorgesehen, dessen Gestaltung vorteilhaft der des Halterings 45 entspricht.

Der erste Teilabschnitt 13 erstreckt sich mit seinem an seinen Aufnahmeabschnitt 49 angrenzenden und teilweise in der Gehäuseaufhahme 42 angeordneten Bereich in einem anderen Längsabschnitt des Führungsrohrs 2 als der zweite Teilabschnitt 14. Der erste Teilabschnitt 13 liegt zumindest mit einem Abschnitt axial hinter dem zweiten Teilabschnitt 14. Der zweite Teilabschnitt 14 besitzt eine dem ersten Massekörper 4 zugewandte Stirnseite 17. Die Stirnseite 17 besitzt zu einer Stirnseite 20 des Massekörpers 4, die dem zweiten Massekörper 7 (Fig. 1) zugewandt liegt, einen in Richtung der Längsmittelachse 21 gemessenen Abstand d₁. Der Abstand d₁ beträgt vorteilhaft mindestens 1 cm. Der erste Teilabschnitt 13 überbrückt demnach einen Abstand, der zwischen dem zweiten Teilabschnitt 14 und dem ersten Massekörper 4 gebildet ist.

Wie Fig. 4 auch zeigt, ist das Mittel 11 zur Energieübertragung im zweiten Teilabschnitt 14 des Führungsrohrs 2 in einer Führung 39 gelagert. Die Führung 39 ist als sogenannter Liner ausgebildet und erstreckt sich im Ausführungsbeispiel über einen Großteil der Länge des zweiten Teilabschnitts 14.

Die vergrößerte Darstellung in Fig. 5 zeigt die Anordnung des zweiten Teilabschnitts 14 im ersten Teilabschnitt 13 im Einzelnen. Die Schelle 29 mit der Innenhülse 37 ist fest mit dem rohrförmigen Abschnitt 87 des zweiten Teilabschnitts 14 verbunden. Die Innenhülse 37 besitzt an dem dem ersten Massekörper 4 zugewandten Ende einen nach außen ragenden Bund 57, der in eine Vertiefung 56 im Antivibrationselement 16 ragt. Der Bund 57 und die Vertiefung 56 sind identisch zum Bund 47 und der Vertiefung 46 (Fig. 4) am ersten Teilabschnitt 13 und am ersten Antivibrationselement 12 ausgebildet. Das zweite Antivibrationselement 16 besitzt einen Rand 53, der an einem Bund 58 in der Teilabschnittsaufhahme 79 anliegt. Am Bund 58 erweitert sich der Innendurchmesser der Teilabschnittsaufhahme 79 in Richtung auf den zweiten Massekörper 7 (Fig. 1). Der Innendurchmesser der Teilabschnittsaufhahme 79 erweitert sich vom Boden der Teilabschnittsaufhahme 79 zum freien Ende der Teilabschnittsaufnahme 79.

Wie Fig. 5 zeigt, besitzt das zweite Antivibrationselement 16 einen Grundkörper 54, der als Hohlzylinder ausgebildet ist und an dem ein Boden 52 sowie der nach außen ragende Rand 53 angeformt sind. Wie Fig. 5 auch zeigt, ist in das dem ersten Massekörper 4 zugewandte Ende des zweiten Teilabschnitts 14 ein Stopfen 60 eingeschoben, der durch die Innenhülse 37 in Richtung der Längsmittelachse 21 fixiert ist. Der erste Teilabschnitt 13 besitzt im Bereich des Aufhahmeabschnitts 49 Erhebungen 51, die ein gutes Greifen des Führungsrohrs 2 im Bereich des Aufhahmeabschnitts 49 ermöglichen.

Wie Fig. 5 auch zeigt, besitzt der zweite Teilabschnitt 14 an seiner dem ersten Massekörper 4 zugewandten Stirnseite 17 einen Außendurchmesser a, der einem Außendurchmesser b des ersten Teilabschnitts 13 ebenfalls an seiner dem ersten Massekörper 4 zugewandten Stirnseite 19 entspricht. Die Stirnseite 19 ist dabei die in den ersten Massekörper 4 hineinragende, dem zweiten Massekörper 7 abgewandte Stirnseite des ersten Teilabschnitts 13.

Der erste Teilabschnitt 13 besitzt einen Eingreifabschnitt 48, der in der Gehäuseaufnahme 42 des Gehäuses 5 angeordnet ist. In Fig. 5 ist auch der Aufnahmeabschnitt 49 gezeigt. Zwischen dem Eingreifabschnitt 48 und dem Aufnahmeabschnitt 49 ist ein Abstand gebildet. An der dem Aufhahmeabschnitt 49 zugewandten Seite besitzt der Eingreifabschnitt 48 einen Absatz 50, der zur Anlage am ersten Antivibrationselement 12 vorgesehen ist und der in die Gehäuseaufhahme 42 ragt, wie Fig. 4 zeigt.

Wie Fig. 5 zeigt, besitzt der erste Teilabschnitt 13 eine dem ersten Massekörper 4 abgewandte und dem zweiten Massekörper 7 zugewandte Stirnseite 18. Die Stirnseite 18 liegt weiter vom ersten Massekörper 4 entfernt als die dem ersten Massekörper 4 zugewandte Stirnseite 17 des zweiten Teilabschnitts 14. Die Teilabschnitte 13 und 14 überlappen sich demnach, und zwar im Aufnahmeabschnitt 49 des ersten Teilabschnitts 13. Der zweite Teilabschnitt 14 besitzt die in Richtung der Längsmittelachse 21 gemessene Länge l₁. Die Länge l₁ ist bis zur Stirnseite 17 gemessen. Die Stirnseite 17 liegt im Ausführungsbeispiel innerhalb der Teilabschnittsaufhahme 79. Der erste Teilabschnitt 13 besitzt eine parallel zur Längsmittelachse 21 zwischen seinen Stirnseiten 18 und 19 gemessene Länge l₂, die deutlich kleiner als die Länge l₁ ist.

Wie die Fig. 1 und 4 zeigen, ist die Stoßstelle 15 außerhalb der beiden Massekörper 4 und 7 zwischen den Massekörpern 4 und 7 angeordnet. Die in Richtung der Längsmittelachse 21 gemessene Gesamtlänge L des Führungsrohrs 2 ist größer als die in Richtung der Längsmittelachse 21 gemessene Länge l₁ des zweiten Teilabschnitts 14 und die in Richtung der Längsmittelachse 21 gemessene Länge l₂ des ersten Teilabschnitts 13. Der Abstand d₁ zwischen der Stirnseite 17 des zweiten Teilabschnittes 14 und dem ersten Massekörper 4 ist kleiner als ein Drittel des Abstands D zwischen den Massekörpern 4 und 7. Der Abstand d₁ ist insbesondere kleiner als ein Fünftel, bevorzugt kleiner als ein Zehntel des Abstands D.

Wie Fig. 5 auch zeigt, besitzt das Mittel 11 zur Energieübertragung an dem am ersten Massekörper 4 angeordneten Ende einen Eingriffszapfen 59, der eine Geometrie zur drehfesten Verbindung mit der Antriebshülse 40 zur Übertragung des Antriebsmoments besitzt. Im Ausführungsbeispiel besitzt der Eingriffszapfen 59 einen Vierkantquerschnitt. Auch andere unrunde Querschnitte können jedoch vorteilhaft sein.

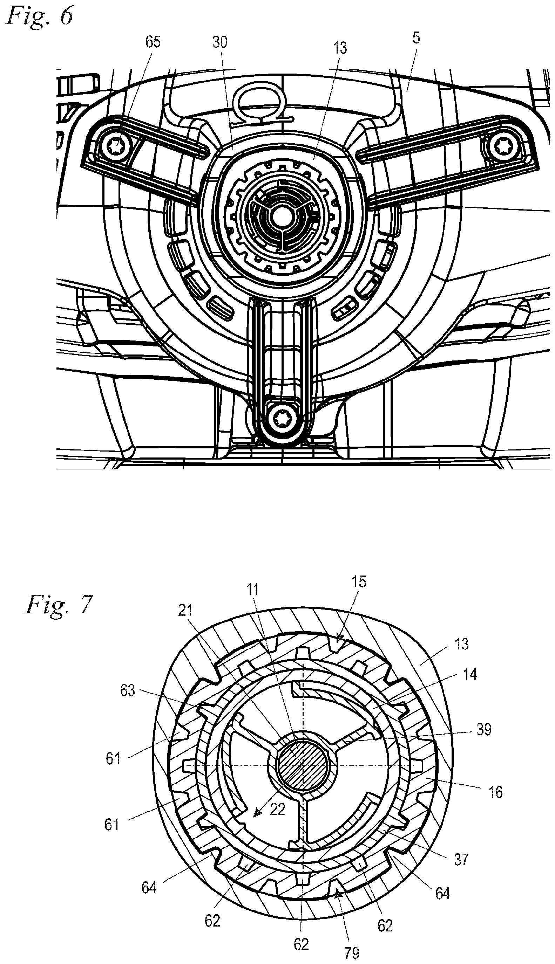

Wie Fig. 7 zeigt, ist der den Aufhahmestutzen 30 tragende Teil des Gehäuses 5 über Befestigungsschrauben 65 mit weiteren Teilen eines Gehäuses 5 fest verbunden. Der Aufnahmestutzen 30 ist demnach Teil des Gehäuses 5.

Fig. 6 zeigt einen Schnitt durch das Führungsrohr 2 im Bereich des Aufnahmeabschnitts 49 des ersten Teilabschnitts 13, also durch das Antivibrationselement 16. Wie Fig. 7 zeigt, besitzt die Teilabschnittsaufhahme 79 keinen kreisförmigen Querschnitt, sondern weist nach innen ragende, gleichmäßig über den Umfang verteilte Längsrippen 64 auf. Im Ausführungsbeispiel sind vier Längsrippen 64 vorgesehen. Das Antivibrationselement 16 weist Außenvertiefungen 61 an seinem Außenumfang auf, deren Form der der Längsrippen 64 entspricht. Im Ausführungsbeispiel verlaufen die Längsrippen 64 und die Außenvertiefungen 61 parallel zur Längsmittelachse 21. Die Anzahl der Außenvertiefungen 61 ist jedoch größer als die der Längsrippen 64. Im Ausführungsbeispiel sind zwölf Außenvertiefungen 61 vorgesehen. Das Antivibrationselement 16 besitzt außerdem in Richtung der Längsmittelachse 21 verlaufende Innenvertiefungen 62. Im Ausführungsbeispiel besitzen die Außenvertiefungen 61 und die Innenvertiefungen 62 einen näherungsweise trapezförmigen Querschnitt. In die Innenvertiefungen 62 ragen Längsrippen 63 der Innenhülse 37 des zweiten Teilabschnitts 14. Im Ausführungsbeispiel sind die Innenvertiefungen 62 und die Außenvertiefungen 61 in Umfangsrichtung abwechselnd und in gleichmäßigem Abstand zueinander über den gesamten Umfang verteilt angeordnet.

Das Führungsrohr 2 besitzt eine Vielzahl von Radialrichtungen 22, die sich von der Längsmittelachse 21 senkrecht und radial nach außen erstrecken. In jeder Radialrichtung 22 ist das Vibrationselement 16 zwischen dem zweiten Teilabschnitt 14 und dem ersten Teilabschnitt 13 angeordnet. Über die Außenvertiefungen 61 und die in die Außenvertiefungen 61 eingreifenden Längsrippen 64 ist das Antivibrationselement 16 drehfest mit dem ersten Teilabschnitt 13 verbunden. Über die Längsrippen 63 und die Innenvertiefungen 62 des Antivibrationselements 16 ist das Antivibrationselement 16 drehfest mit dem zweiten Teilabschnitt 14 verbunden. Dadurch können über das Antivibrationselement 16 auch Drehmomente um die Längsmittelachse 21 übertragen werden. Es kann vorgesehen sein, dass sich die Längsrippen 63 und die Längsrippen 64 in Radialrichtung 22 überlappen, dass also der Abstand der Längsrippen 64 zur Längsmittelachse 21 kleiner ist als der größte Abstand der Längsrippen 63 zur Längsmittelachse 21.

Fig. 7 zeigt auch die Gestaltung der Führung 39. Die Führung 39 besitzt einzelne in Radialrichtung 22 ragende Arme, die sich zwischen einem das Mittel 11 zur Energieübertragung, nämlich die Antriebswelle, umgebenden Bereich und dem zweiten Teilabschnitt 14 erstrecken. Auch jede andere Gestaltung einer Führung 39 kann vorteilhaft sein.

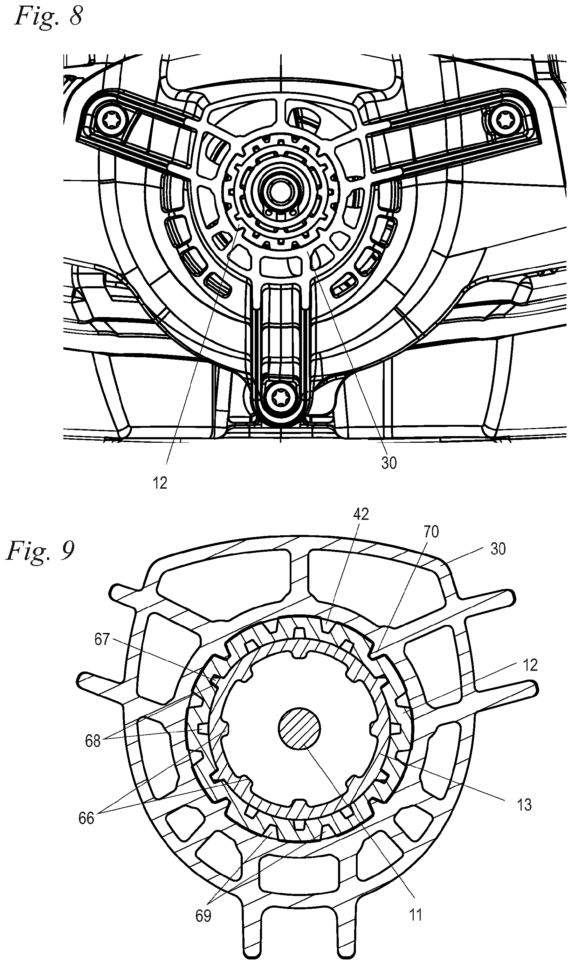

Die Fig. 8 und 9 zeigen einen Schnitt durch das Führungsrohr 2 im Bereich des ersten Antivibrationselements 12 und des Aufnahmestutzens 30. Auch das erste Antivibrationselement 12 ist sowohl mit dem Aufnahmestutzen 30 des Gehäuses 5 als auch mit dem ersten Teilabschnitt 13 drehfest verbunden. Hierzu besitzt der erste Teilabschnitt 13 radial nach außen ragende Längsrippen 67, die in entsprechende Innenvertiefungen 68 des ersten Antivibrationselements 12 ragen. An seinem Außenumfang besitzt das erste Antivibrationselement 12 Außenvertiefungen 69, in die Längsrippen 70 der Gehäuseaufnahme 42 ragen. An der Innenseite des ersten Teilabschnitts 13 sind Versteifungsrippen 66 vorgesehen, die vorteilhaft in Verlängerung der Längsrippen 64 (Fig. 8) liegen. Die Innenvertiefungen 68 und die Außenvertiefungen 69 sind im Ausführungsbeispiel als in Richtung der Längsmittelachse 21 verlaufende Nuten ausgebildet. Die Längsrippen 67 und 70 sind als parallel zur Längsmittelachse 21 verlaufende Stege ausgebildet.

Im Ausführungsbeispiel nach den Figuren 1 bis 9 ist das zweite Antivibrationselement 16 näher am ersten Massekörper 4 angeordnet als am zweiten Massekörper 7. Im Ausführungsbeispiel ist die Stoßstelle 15 näher am Gehäuse 5 als am Werkzeug 8 angeordnet. Es kann jedoch in alternativer Gestaltung auch vorgesehen sein, dass das zweite Antivibrationselement 16 näher am zweiten Massekörper 7 angeordnet ist als am ersten Massekörper 4. In der alternativen Gestaltung ist die Stoßstelle näher am Werkzeug 8 als am Gehäuse 5 angeordnet. Im Ausführungsbeispiel ist das erste Antivibrationselement 12 zwischen dem ersten Massekörper 4 und dem Führungsrohr 2 angeordnet. Alternativ oder zusätzlich kann vorgesehen sein, dass ein erstes Antivibrationselement zwischen dem zweiten Massekörper 7 und dem Führungsrohr 2 angeordnet ist.

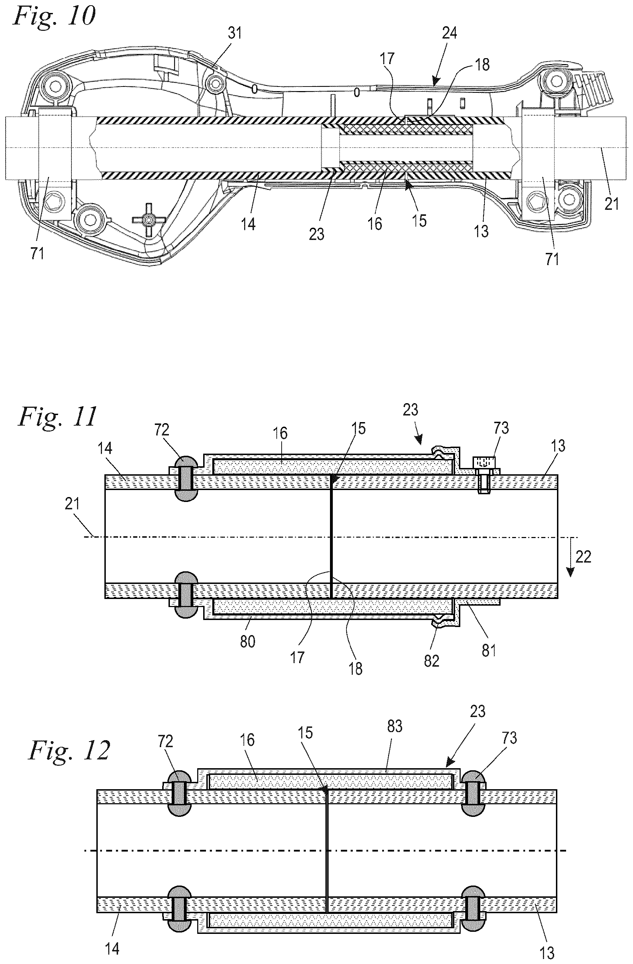

Fig. 10 zeigt ein Ausführungsbeispiel für eine Stoßstelle 15 zwischen einem ersten Teilabschnitt 13 und einem zweiten Teilabschnitt 14 eines Führungsrohrs 2. Die Stoßstelle 15 ist in einem Handgriff 24 angeordnet, von dem in Fig. 10 nur eine Griffschale 31 gezeigt ist. Die Teilabschnitte 13 und 14 sind gegenüber dem Handgriff 24 über beidseitig der Stoßstelle 15 angeordnete Schellen 71 axial fixiert. An der Stoßstelle 15 liegen die Teilabschnitte 13 und 14 mit ihren einander zugewandten Stirnseiten 17 und 18 überlappungsfrei nebeneinander. Die Stoßstelle 15 wird von einem zweiten Antivibrationselement 16 überbrückt, das in den ersten Teilabschnitt 13 und den zweiten Teilabschnitt 14 eingesteckt ist. Zur Fixierung des Antivibrationselements 16 dient eine Befestigungsvorrichtung 23, die im Ausführungsbeispiel hülsenförmig ausgebildet ist und in das hülsenförmige Antivibrationselement 16 ragt. Die Befestigungsvorrichtung 23 liegt vorteilhaft nur an einem der Teilabschnitte 13 oder 14 an. Das Antivibrationselement 16 ist radial innerhalb der Teilabschnitte 13 und 14 angeordnet. Auch die Befestigungsvorrichtung 23 überbrückt die Stoßstelle 15. Die Stoßstelle 15 wird außerdem vom Handgriff 24 überbrückt.

Das Antivibrationselement 16 und die Befestigungsvorrichtung 23 sind so ausgebildet, dass die Steifigkeit des Führungsrohrs 2 an der Stoßstelle 15, also die gemeinsame Steifigkeit des Antivibrationselements 16 und der Befestigungsvorrichtung 23, geringer ist als die Steifigkeit der Teilabschnitte 13 oder 14 in den außerhalb der Stoßstelle 15 und außerhalb des Antivibrationselements 16 und der Befestigungsvorrichtung 23 liegenden Bereichen. An der Stoßstelle 15 ergibt sich dadurch ein Steifigkeitssprung des Führungsrohrs 2.

Fig. 11 zeigt ein Ausführungsbeispiel für eine Stoßstelle 15 zwischen zwei Teilabschnitten 13 und 14 eines Führungsrohrs 2. An der Stoßstelle 15 liegen die Stirnseiten 17 und 18 der Teilabschnitte 13 und 14 überlappungsfrei nebeneinander. Die Stoßstelle 15 wird von einem Antivibrationselement 16 überbrückt, das hülsenförmig ausgebildet ist und am Außenumfang der Teilabschnitte 13 und 14 angeordnet ist. Das Antivibrationselement 16 liegt damit bezogen auf die Radialrichtung 22 außerhalb der Teilabschnitte 13 und 14. Die Teilabschnitte 13 und 14 ragen in das Antivibrationselement 16. Zur Fixierung des Antivibrationselements 16 ist eine Befestigungsvorrichtung 23 vorgesehen, die eine erste Befestigungshülse 80 und eine zweite Befestigungshülse 81 umfasst. Die Befestigungshülse 80 ist mit Befestigungselementen 72 am zweiten Teilabschnitt 14 fixiert. Die Befestigungshülse 81 ist mit Befestigungselementen 73 am ersten Teilabschnitt 13 fixiert. Im Ausführungsbeispiel sind die Befestigungselemente 72 Niete und die Befestigungselemente 73 Schrauben. Auch andere Befestigungselemente 72 und 73 können vorteilhaft sein. Die Befestigungshülsen 80 und 81 sind über eine Schnappverbindung 82 miteinander verbunden. Über die Schnappverbindung 82 sind die Befestigungshülsen 80 und 81 und damit die Teilabschnitte 13 und 14 in Richtung der Längsmittelachse 21 zueinander fixiert.

Fig. 12 zeigt ein weiteres Ausführungsbeispiel, bei dem die Stoßstelle 15 von einem Antivibrationselement 16 sowie einer Befestigungsvorrichtung 23 überbrückt ist. Die Befestigungsvorrichtung 23 umfasst eine Befestigungshülse 83, die gemeinsam mit dem Antivibrationselement 16 die Stoßstelle 15 überbrückt. Die Befestigungshülse 83 ist mit Befestigungselementen 72 am zweiten Teilabschnitt 14 und mit Befestigungselementen 73 am ersten Teilabschnitt 13 fixiert. Im Ausführungsbeispiel sind die Befestigungselemente 72 und 73 als Niete ausgebildet. Die Befestigungshülse 83 besitzt in einem die Stoßstelle 15 überbrückenden Bereich einen vergrößerten Innendurchmesser, so dass ein Aufnahmeraum für das Antivibrationselement 16 zwischen den Teilabschnitten 13 und 14 und der Befestigungshülse 83 gebildet ist.

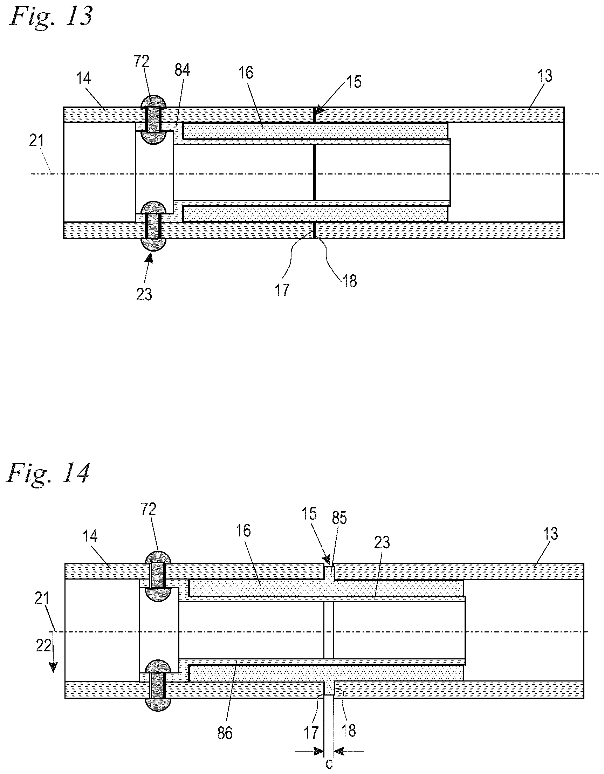

Bei dem in Fig. 13 gezeigten Ausführungsbeispiel liegen die Teilabschnitte 13 und 14 mit ihren Stirnseiten 17 und 18 ebenfalls überlappungsfrei nebeneinander. An der Stoßstelle 15 ist im Inneren der Teilabschnitte 13 und 14 ein Antivibrationselement 16 angeordnet, das hülsenförmig ausgebildet ist und die Stoßstelle 15 überbrückt. Das Antivibrationselement 16 ist über eine Befestigungsvorrichtung 23 am zweiten Teilabschnitt 14 fixiert. Die Befestigungsvorrichtung 23 umfasst eine Befestigungshülse 84, die ins Innere des Antivibrationselements 16 ragt und die über Befestigungselemente 72 am zweiten Teilabschnitt 40 fixiert ist. Eine Fixierung der Befestigungshülse 84 am ersten Teilabschnitt 13 ist im Ausführungsbeispiel nicht vorgesehen, kann jedoch ebenfalls vorteilhaft sein.

Fig. 14 zeigt ein weiteres Ausführungsbeispiel der Anordnung eines Antivibrationselements 16 zwischen zwei Teilabschnitten 13 und 14. Wie Fig. 14 zeigt, besitzen die Stirnseiten 17 und 18 der Teilabschnitte 13 und 14 zueinander in Richtung der Längsmittelachse 21 einen Abstand c. Die Stirnseite 18 ist dabei näher am ersten Massekörper 4 (Fig. 1) angeordnet als die Stirnseite 17. Die beiden Teilabschnitte 13 und 14 überlappen sich in Radialrichtung 22 nicht. Das Antivibrationselement 16 besitzt einen nach außen ragenden, verdickten Abschnitt 85, der zwischen die Teilabschnitte 13 und 14 ragt. Dadurch sind die Teilabschnitte 13 und 14 nicht nur in Radialrichtung 22, sondern auch in Richtung der Längsmittelachse 21 voneinander schwingungsentkoppelt. Zur Fixierung des Antivibrationselementes 16 ist eine Befestigungsvorrichtung 23 vorgesehen, die eine Befestigungshülse 86 sowie Befestigungselemente 72, im Ausführungsbeispiel Niete, umfasst. Die Befestigungshülse 86 ist im Inneren des Antivibrationselements 16 angeordnet.

In allen Ausführungsbeispielen ist die Anordnung der Befestigungsvorrichtung 23 so getroffen, dass im Bereich der Längsmittelachse 21 ausreichend Bauraum für die Mittel 11 zur Energieübertragung bleibt.

Die Antivibrationselemente 12 und 16 bestehen mindestens teilweise aus einem Elastomer, beispielsweise aus Gummi. Die Antivibrationselemente 12 und 16 besitzen federnde Eigenschaften und verändern dadurch die Eigenschwingform des Führungsrohrs 2. Zusätzlich besitzen die Antivibrationselemente 12 und 16 bevorzugt auch dämpfende Eigenschaften, so dass die Amplituden der entstehenden Schwingungen verringert werden. In allen Ausführungsbeispielen kann eine drehfeste Verbindung des zweiten Antivibrationselements 16 mit beiden Teilabschnitten 13 und 14 vorteilhaft sein.

In allen Ausführungsbeispielen ist die Steifigkeit des Führungsrohrs 2 an der Stoßstelle 15 geringer als die Steifigkeit des Führungsrohrs 2 in einem abseits der Stoßstelle 15 und abseits des Antivibrationselements 16 liegenden Bereich.

Die Stoßstelle 15 ist vorteilhaft nicht im Bereich einer Teleskopeinrichtung angeordnet. Die Gesamtlänge der beiden Teilabschnitte 13 und 14, die im Ausführungsbeispiel der Gesamtlänge L des Führungsrohrs 2 entspricht, ist vorteilhaft unveränderlich. An der Stoßstelle nimmt die Steifigkeit des Führungsrohrs 2 sprunghaft ab. In vorteilhafter Gestaltung übergreift einer der Teilabschnitte 13, 14 den anderen der Teilabschnitte 13, 14. Weitere vorteilhafte Ausführungen ergeben sich, wenn die Teilabschnitte 13 und 14 überlappungsfrei nebeneinander liegen.

Vorteilhaft ist die Länge eines Teilabschnitts des Führungsrohrs 2 mindestens doppelt so groß, insbesondere mindestens viermal so groß wie die Länge des anderen Teilabschnitts des Führungsrohrs.

Bei einem weiteren vorteilhaften Ausführungsbeispiel besitzt das Führungsrohr eine weitere Stoßstelle 15, an der zwei starre Teilabschnitte des Führungsrohrs miteinander verbunden sind, wobei die beiden Teilabschnitte des Führungsrohrs 2 in Richtung der Längsmittelachse 21 gegeneinander axial verschiebbar sind. An der weiteren Stoßstelle ist demnach eine Teleskopeinrichtung gebildet.

Das Führungsrohr 2 kann an der Stoßstelle 15 in die Teilabschnitte 13 und 14 trennbar sein, wobei insbesondere eine Antriebswelle und/oder Bowdenzüge an bzw. umliegend zur Stoßstelle 15 ununterbrochen verlaufen. Eine Stoßstelle 15 ist demnach insbesondere nicht zur Trennung des Arbeitsgeräts beispielsweise, um einen einfachen Transport oder dergleichen zu ermöglichen, vorgesehen. Die Stoßstelle 15 ist vorteilhaft für den Bediener nicht erkennbar.

In dem in den Figuren gezeigten Ausführungsbeispiel ist der Antriebsmotor 9 in dem Gehäuse 5 angeordnet und Teil des ersten Massekörpers 4. Der Antriebsmotor 9 kann jedoch auch Teil des zweiten Massekörpers 7 sein. Dies ist insbesondere dann vorteilhaft, wenn der Antriebsmotor 9 ein Elektromotor ist. Die Mittel 11 zur Energieübertragung, die durch das Führungsrohr 2 geführt sind, umfassen in diesem Fall vorteilhaft mindestens eine Leitung, die den Elektromotor mit Energie versorgt. Die elektrische Leitung ist an der Stoßstelle 15 vorteilhaft nicht unterbrochen. Die elektrische Leitung erstreckt sich insbesondere zumindest vom ersten Ende 3 bis zum zweiten Ende 6 des Führungsrohrs 2 und ist höchstens im Bereich einer Teleskopeinrichtung unterbrochen, um axiale Relativbewegungen von Abschnitten des Führungsrohrs 2 durch die Teleskopeinrichtung zu ermöglichen.

Für den Aufbau des Arbeitsgeräts sind insbesondere folgende Anordnungen vorteilhaft:
- Der erste Massekörper 4 umfasst einen als Verbrennungsmotor ausgebildeten Antriebsmotor 4 und einen Kraftstofftank, der zweite Massekörper 7 umfasst das Werkzeug 8 sowie optional ein Getriebe, und die Mittel 11 zur Energieübertragung sind durch eine durch das Führungsrohr 2 geführte Antriebswelle gebildet.
- Der erste Massekörper 4 umfasst einen Akku oder eine Batterie oder ein Anschlusskabel zur Energieversorgung, der zweite Massekörper 7 umfasst einen als Elektromotor ausgebildeten Antriebsmotor 4, das Werkzeug 8 sowie optional ein Getriebe, und die Mittel 11 zur Energieübertragung sind durch eine durch das Führungsrohr 2 geführte elektrische Leitung gebildet.
- Der erste Massekörper 4 umfasst einen als Elektromotor ausgebildeten Antriebsmotor 4 und einen Akku oder eine Batterie oder ein Anschlusskabel zur Energieversorgung, der zweite Massekörper 7 umfasst das Werkzeug 8 sowie optional ein Getriebe, und die Mittel 11 zur Energieübertragung sind durch eine durch das Führungsrohr 2 geführte Antriebswelle gebildet.

## Patentansprüche

1. Handgeführtes Arbeitsgerät mit einem Führungsrohr (2), wobei an einem ersten Ende (3) des Führungsrohrs (2) ein erster Massekörper (4) angeordnet ist, wobei an einem zweiten Ende (6) des Führungsrohrs (2) ein zweiter Massekörper (7) angeordnet ist, wobei einer der Massekörper (4) zumindest ein Gehäuse (5) und der andere der Massekörper (7) zumindest ein Werkzeug (8) umfasst, wobei das Werkzeug (8) von einem Antriebsmotor (9) angetrieben ist, wobei im Inneren (10) des Führungsrohrs (2) Mittel (11) zur Energieübertragung für den Antrieb des Werkzeugs (8) zwischen dem ersten Ende (3) und dem zweiten Ende (6) geführt sind, wobei zwischen dem ersten Ende (3) des Führungsrohrs (2) und dem ersten Massekörper (4) ein erstes Antivibrationselement (12) angeordnet ist, **dadurch gekennzeichnet, dass** das Führungsrohr (2) in Richtung seiner Längsmittelachse (21) mindestens einen ersten starren Teilabschnitt (13) und einen zweiten starren Teilabschnitt (14) umfasst, dass der zweite Teilabschnitt (14) eine dem ersten Massekörper (4) zugewandte Stirnseite (17) besitzt, dass die Stirnseite (17) zu einer Stirnseite (20) des ersten Massekörpers (4), die dem zweiten Massekörper (7) zugewandt liegt, einen in Richtung der Längsmittelachse (21) gemessenen Abstand (d₁) besitzt, und dass die beiden Teilabschnitte (13, 14) an einer Stoßstelle (15) miteinander verbunden sind, wobei der erste Teilabschnitt (13) und der zweite Teilabschnitt (14) an der Stoßstelle (15) über mindestens ein zweites Antivibrationselement (16) miteinander verbunden sind.

2. Arbeitsgerät nach Anspruch 1,
**dadurch gekennzeichnet, dass** die beiden Teilabschnitte (13, 14) eine unveränderliche Gesamtlänge (L) besitzen.

3. Arbeitsgerät nach Anspruch 1 oder 2,
**dadurch gekennzeichnet, dass** die in Richtung der Längsmittelachse (21) gemessene Gesamtlänge (L) des Führungsrohrs (2) größer als die in Richtung der Längsmittelachse (21) gemessene Länge (l₁, l₂) jedes der Teilabschnitte (13, 14) ist.

4. Arbeitsgerät nach einem der Ansprüche 1 bis 3,
**dadurch gekennzeichnet, dass** das zweite Antivibrationselement (16) mindestens teilweise aus Elastomer besteht.

5. Arbeitsgerät nach einem der Ansprüche 1 bis 4,
**dadurch gekennzeichnet, dass** die Stoßstelle (15) außerhalb der beiden Massekörper (4, 7) angeordnet ist.

6. Arbeitsgerät nach einem der Ansprüche 1 bis 5,
**dadurch gekennzeichnet, dass** die Stirnseite (17) des zweiten Teilabschnitts (14) zum ersten Massekörper (4) einen Abstand (d₁) besitzt, der kleiner als ein Drittel, insbesondere kleiner als ein Fünftel, des Abstandes (D) zwischen dem ersten Massekörper (4) und dem zweiten Massekörper (7) ist.

7. Arbeitsgerät nach einem der Ansprüche 1 bis 6,
**dadurch gekennzeichnet, dass** der erste Teilabschnitt (13) den zweiten Teilabschnitt (14) in Längsrichtung (20) des Führungsrohrs (2) im Bereich der Stoßstelle (15) übergreift.

8. Arbeitsgerät nach Anspruch 7,
**dadurch gekennzeichnet, dass** das zweite Antivibrationselement (16) bezüglich der Längsmittelachse (21) des Führungsrohrs (2) in Radialrichtung (22) zwischen dem ersten Teilabschnitt (13) und dem zweiten Teilabschnitt (14) angeordnet ist.

9. Arbeitsgerät nach einem der Ansprüche 1 bis 6,
**dadurch gekennzeichnet, dass** die einander zugewandten Stirnseiten (17, 18) des ersten Teilabschnitts (13) und des zweiten Teilabschnitts (14) in Richtung der Längsmittelachse (21) des Führungsrohrs (2) überlappungsfrei nebeneinander angeordnet sind.

10. Arbeitsgerät nach Anspruch 9,
**dadurch gekennzeichnet, dass** das zweite Antivibrationselement (16) bezogen auf die Richtung der Längsmittelachse (21) radial außerhalb des ersten Teilabschnitts (13) und des zweiten Teilabschnitts (14) angeordnet ist, und dass das zweite Antivibrationselement (16) an mindestens einem Teilabschnitt (13, 14) anliegt.

11. Arbeitsgerät nach Anspruch 9 oder 10,
**dadurch gekennzeichnet, dass** das zweite Antivibrationselement (16) bezogen auf die Richtung der Längsmittelachse (21) radial innerhalb des ersten Teilabschnitts (13) und des zweiten Teilabschnitts (14) angeordnet ist, und dass das zweite Antivibrationselement (16) an mindestens einem Teilabschnitt (13, 14) anliegt.

12. Arbeitsgerät nach einem der Ansprüche 9 bis 11,
**dadurch gekennzeichnet, dass** das zweite Antivibrationselement (16) zwischen den einander zugewandten Stirnseiten (17, 18) des ersten Teilabschnitts (13) und des zweiten Teilabschnitts (14) angeordnet ist.

13. Arbeitsgerät nach einem der Ansprüche 1 bis 12,
**dadurch gekennzeichnet, dass** das zweite Antivibrationselement (16) drehfest mit dem ersten Teilabschnitt (13) und drehfest mit dem zweiten Teilabschnitt (14) verbunden ist.

14. Arbeitsgerät nach einem der Ansprüche 1 bis 13,
**dadurch gekennzeichnet, dass** das zweite Antivibrationselement (16) über eine Befestigungsvorrichtung (19) fixiert ist, und dass die Befestigungsvorrichtung (19) insbesondere eine geringere Steifigkeit als das Führungsrohr (2) abseits der Stoßstelle (15) und des Antivibrationselements (16) besitzt.

15. Arbeitsgerät nach einem der Ansprüche 1 bis 14,
**dadurch gekennzeichnet, dass** der erste Teilabschnitt (13) und der zweite Teilabschnitt (14) an der dem ersten Massekörper (4) zugewandten Stirnseite (17, 19) den gleichen Außendurchmesser (a, b) besitzen.

16. Arbeitsgerät nach einem der Ansprüche 1 bis 15,
**dadurch gekennzeichnet, dass** der erste Massekörper (4) das Gehäuse (5) umfasst, und dass der zweite Massekörper (7) das Werkzeug (8) umfasst.

## Claims

1. Handheld work apparatus having a guide tube (2), wherein, at a first end (3) of the guide tube (2), a first mass body (4) is arranged, wherein, at a second end (6) of the guide tube (2), a second mass body (7) is arranged, wherein one of the mass bodies (4) comprises at least one housing (5) and the other of the mass bodies (7) comprises at least one tool (8), wherein the tool (8) is driven by a drive motor (9), wherein, in the interior (10) of the guide tube (2), energy transmission means (11) for driving the tool (8) are guided between the first end (3) and the second end (6), wherein, between the first end (3) of the guide tube (2) and the first mass body (4), a first anti-vibration element (12) is arranged, **characterized in that** the guide tube (2) comprises, in the direction of its longitudinal centre axis (21), at least a first rigid portion (13) and a second rigid portion (14), **in that** the second portion (14) has an end face (17) facing the first mass body (4), **in that** the end face (17) is at a distance (di), measured in the direction of the longitudinal centre axis (21), from an end face (20) of the first mass body (4) that faces the second mass body (7), and **in that** the two portions (13, 14) are connected together at a butt joint (15), wherein the first portion (13) and the second portion (14) are connected together via at least one second antivibration element (16) at the butt joint (15).

2. Work apparatus according to Claim 1,
**characterized in that** the two portions (13, 14) have an invariable total length (L).

3. Work apparatus according to Claim 1 or 2,
**characterized in that** the total length (L), measured in the direction of the longitudinal centre axis (21), of the guide tube (2) is greater than the length (l₁, l₂), measured in the direction of the longitudinal centre axis (21), of each of the portions (13, 14).

4. Work apparatus according to one of Claims 1 to 3,
**characterized in that** the second anti-vibration element (16) consists at least partially of elastomer.

5. Work apparatus according to one of Claims 1 to 4,
**characterized in that** the butt joint (15) is arranged outside the two mass bodies (4, 7).

6. Work apparatus according to one of Claims 1 to 5,
**characterized in that** the end face (17) of the second portion (14) is at a distance (d₁) from the first mass body (4) that is smaller than a third, in particular smaller than a fifth, of the distance (D) between the first mass body (4) and the second mass body (7).

7. Work apparatus according to one of Claims 1 to 6,
**characterized in that** the first portion (13) engages over the second portion (14) in the longitudinal direction (20) of the guide tube (2) in the region of the butt joint (15).

8. Work apparatus according to Claim 7,
**characterized in that** the second anti-vibration element (16) is arranged, with regard to the longitudinal centre axis (21) of the guide tube (2), in a radial direction (22) between the first portion (13) and the second portion (14).

9. Work apparatus according to one of Claims 1 to 6,
**characterized in that** the mutually facing end faces (17, 18) of the first portion (13) and of the second portion (14) are arranged next to one another without an overlap in the direction of the longitudinal centre axis (21) of the guide tube (2).

10. Work apparatus according to Claim 9,
**characterized in that** the second anti-vibration element (16) is arranged, with regard to the direction of the longitudinal centre axis (21), radially outside the first portion (13) and the second portion (14), and **in that** the second antivibration element (16) bears on at least one portion (13, 14).

11. Work apparatus according to Claim 9 or 10,
**characterized in that** the second anti-vibration element (16) is arranged, with regard to the direction of the longitudinal centre axis (21), radially inside the first portion (13) and the second portion (14), and **in that** the second antivibration element (16) bears on at least one portion (13, 14).

12. Work apparatus according to one of Claims 9 to 11,
**characterized in that** the second anti-vibration element (16) is arranged between the mutually facing end faces (17, 18) of the first portion (13) and of the second portion (14).

13. Work apparatus according to one of Claims 1 to 12,
**characterized in that** the second anti-vibration element (16) is connected to the first portion (13) for conjoint rotation and to the second portion (14) for conjoint rotation.

14. Work apparatus according to one of Claims 1 to 13,
**characterized in that** the second anti-vibration element (16) is fixed via a fastening device (19), and **in that** the fastening device (19) exhibits, in particular, lower stiffness than the guide tube (2) away from the butt joint (15) and the antivibration element (16).

15. Work apparatus according to one of Claims 1 to 14,
**characterized in that** the first portion (13) and the second portion (14) have the same outside diameter (a, b) on the end face (17, 19) facing the first mass body (4).

16. Work apparatus according to one of Claims 1 to 15,
**characterized in that** the first mass body (4) comprises the housing (5), and **in that** the second mass body (7) comprises the tool (8).

## Revendications

1. Appareil de travail à main doté d'un tube de guidage (2), un premier corps de masse (4) étant disposé à une première extrémité (3) du tube de guidage (2), un deuxième corps de masse (7) étant disposé à une deuxième extrémité (6) du tube de guidage (2), l'un des corps de masse (4) comportant au moins un boîtier (5) et l'autre des corps de masse (7) comportant au moins un outil (8), l'outil (8) étant entraîné par un moteur d'entraînement (9), des moyens (11) de transmission d'énergie pour l'entraînement de l'outil (8) étant guidés à l'intérieur (10) du tube de guidage (2) entre la première extrémité (3) et la deuxième extrémité (6), un premier élément antivibration (12) étant disposé entre la première extrémité (3) du tube de guidage (2) et le premier corps de masse (4),
**caractérisé en ce que** le tube de guidage (2) comporte, dans la direction de son axe médian longitudinal (21), au moins une première section partielle rigide (13) et une deuxième section partielle rigide (14), **en ce que** la deuxième section partielle (14) présente un côté frontal (17) tourné vers le corps de masse (4), **en ce que** le côté frontal (17) présente, par rapport à un côté frontal (20) du premier corps de masse (4) qui est tourné vers le deuxième corps de masse (7), une distance (d₁) mesurée dans la direction de l'axe médian longitudinal (21), et **en ce que** les deux sections partielles (13, 14) sont reliées l'une à l'autre en un point de butée (15), la première section partielle (13) et la deuxième section partielle (14) étant reliées l'une à l'autre au point de butée (15) par le biais d'au moins un deuxième élément antivibration (16).

2. Appareil de travail selon la revendication 1,
**caractérisé en ce que** les deux sections partielles (13, 14) présentent une longueur totale invariable (L).

3. Appareil de travail selon la revendication 1 ou 2,
**caractérisé en ce que** la longueur totale (L), mesurée dans la direction de l'axe médian longitudinal (21), du tube de guidage (2) est supérieure à la longueur (l₁, l₂), mesurée dans la direction de l'axe médian longitudinal (21), de chacune des sections partielles (13, 14).

4. Appareil de travail selon l'une des revendications 1 à 3,
**caractérisé en ce que** le deuxième élément antivibration (16) est constitué au moins partiellement d'élastomère.

5. Appareil de travail selon l'une des revendications 1 à 4,
**caractérisé en ce que** le point de butée (15) est disposé à l'extérieur des deux corps de masse (4, 7).

6. Appareil de travail selon l'une des revendications 1 à 5,
**caractérisé en ce que** le côté frontal (17) de la deuxième section partielle (14) présente, par rapport au premier corps de masse (4), une distance (d₁) qui est inférieure à un tiers, en particulier inférieure à un cinquième, de la distance (D) entre le premier corps de masse (4) et le deuxième corps de masse (7).

7. Appareil de travail selon l'une des revendications 1 à 6,
**caractérisé en ce que** la première section partielle (13) chevauche la deuxième section partielle (14) dans la direction longitudinale (20) du tube de guidage (2) dans la région du point de butée (15).

8. Appareil de travail selon la revendication 7,
**caractérisé en ce que** le deuxième élément antivibration (16) est disposé entre la première section partielle (13) et la deuxième section partielle (14) dans la direction radiale (22) par rapport à l'axe médian longitudinal (21) du tube de guidage (2).

9. Appareil de travail selon l'une des revendications 1 à 6,
**caractérisé en ce que** les côtés frontaux (17, 18) tournés l'un vers l'autre de la première section partielle (13) et de la deuxième section partielle (14) sont disposés l'un à côté de l'autre sans chevauchement dans la direction de l'axe médian longitudinal (21) du tube de guidage (2).

10. Appareil de travail selon la revendication 9,
**caractérisé en ce que** le deuxième élément antivibration (16) est disposé radialement à l'extérieur de la première section partielle (13) et de la deuxième section partielle (14) par rapport à la direction de l'axe médian longitudinal (21), et **en ce que** le deuxième élément antivibration (16) s'appuie contre au moins une section partielle (13, 14).

11. Appareil de travail selon la revendication 9 ou 10,
**caractérisé en ce que** le deuxième élément antivibration (16) est disposé radialement à l'intérieur de la première section partielle (13) et de la deuxième section partielle (14) par rapport à la direction de l'axe médian longitudinal (21), et **en ce que** le deuxième élément antivibration (16) s'appuie contre au moins une section partielle (13, 14).

12. Appareil de travail selon l'une des revendications 9 à 11,
**caractérisé en ce que** le deuxième élément antivibration (16) est disposé entre les côtés frontaux (17, 18) tournés l'un vers l'autre de la première section partielle (13) et de la deuxième section partielle (14).

13. Appareil de travail selon l'une des revendications 1 à 12,
**caractérisé en ce que** le deuxième élément antivibration (16) est relié de manière solidaire en rotation à la première section partielle (13) et de manière solidaire en rotation à la deuxième section partielle (14).

14. Appareil de travail selon l'une des revendications 1 à 13,
**caractérisé en ce que** le deuxième élément antivibration (16) est fixé par le biais d'un dispositif de fixation (19), et **en ce que** le dispositif de fixation (19) présente en particulier une rigidité inférieure à celle du tube de guidage (2) à l'écart du point de butée (15) et de l'élément antivibration (16).

15. Appareil de travail selon l'une des revendications 1 à 14,
**caractérisé en ce que** la première section partielle (13) et la deuxième section partielle (14) présentent le même diamètre extérieur (a, b) au niveau du côté frontal (17, 19) tourné vers le premier corps de masse (4).

16. Appareil de travail selon l'une des revendications 1 à 15,
**caractérisé en ce que** le premier corps de masse (4) comporte le boîtier (5), et **en ce que** le deuxième corps de masse (7) comporte l'outil (8).
